# EUROPÄISCHE PATENTSCHRIFT

(11) **EP 2 877 990 B1**
(45) Veröffentlichungstag und Bekanntmachung des Hinweises auf die Patenterteilung: **26.05.2021**
(21) Anmeldenummer: 13736823.9
(22) Anmeldetag: 02.07.2013
(51) Int. Cl.: G10K 9/22

(54) **ULTRASCHALLSENSORVORRICHTUNG**
ULTRASONIC SENSOR DEVICE
DISPOSITIF CAPTEUR D'ULTRASONS

(30) Priorität: 26.07.2012 DE 102012014810
(43) Veröffentlichungstag der Anmeldung: 03.06.2015
(73) Patentinhaber: Volkswagen Aktiengesellschaft, 38440 Wolfsburg (DE)
(72) Erfinder: URBAN, Alexander, 38518 Gifhorn (DE); MAX, Stephan, 38518 Gifhorn (DE); PRAUSSE, Claudia, 38120 Braunschweig (DE); KATZWINKEL, Reiner, 38527 Meine (DE)
(86) Internationale Anmeldenummer: PCT/EP2013/063915
(87) Internationale Veröffentlichungsnummer: WO 2014/016081

(56) Entgegenhaltungen:
- EP-A2- 0 858 844
- DE-A1- 4 238 924
- DE-A1-102008 055 126
- DE-A1-102010 044 995

## Beschreibung

Die Erfindung betrifft eine Ultraschallsensorvorrichtung zur Detektion von Oberflächen und/oder zur Detektion des Abstandes erkannter Oberflächen mit einem Ultraschallsensor, der Signale durch ein metallisches Teil sendet und empfängt, und einem im wesentlichen ringförmigen Dämpfungsteil, welches den Ultraschallsensor umgibt, insbesondere für Kraftfahrzeuge.

Die umfassende Abbildung und Überwachung des Nahbereichs von Fahrzeugen bedingt die Installation von Ultraschallsensoren in den Fahrzeugflanken zur zusätzlichen Erkennung von Objekten an den Seiten des Fahrzeuges.

Es ist bekannt, dass Ultraschallsensoren an Stoßfängern des Fahrzeugs verbaut werden. Dabei ist ein sichtbarer Verbau bekannt. Dabei weisen die Stoßfänger Aussparungen auf, durch welche sich die Ultraschallsensoren erstrecken und frei nach außen liegend senden und empfangen.

Weiterhin ist eine Anordnung der für die Detektion von Objekten an den Seiten des Fahrzeuges notwendigen Ultraschallsensoren mittels Aussparungen in den Flanken analog zu den bereits bestehenden Front- und Hecksystemen bekannt Das ist sowohl vom produktionstechnischen Standpunkt als auch aus ästhetischen Gründen unbefriedigend.

Darüber hinaus ist jedoch auch eine verdeckte Bauweise derartiger Ultraschallsensoren an Stoßfängern bekannt. Dabei werden die Ultraschallsensoren hinter dem Stoßfänger angeordnet und frontseitig vollständig durch den Stoßfänger bzw. dessen Material verdeckt. Aufgrund der direkten Befestigung der Ultraschallsensorvorrichtung an der Innenseite des Stoßfängers ist dieser quasi auch direkt an den Stoßfänger gekoppelt, das vollständige Ultraschallsignal geht über den Stoßfänger nach außen. Dadurch wird auch der Stoßfänger mit dieser Schwingung beaufschlagt. Aufgrund der Beaufschlagung des Stoßfängers entstehen Echos und Störsignale, die zu Fehlern bei der Objektdetektion führen.

Um die Schwingungen im Stoßfänger und somit den Körperschall lokal zu begrenzen, ist es aus der DE 42 38 924 A1 bekannt, dass die verdeckt verbauten Ultraschallsensoren ein Begrenzungsring den Ultraschallsensor umgibt. Dabei ist vorgesehen, dass die Klebung zwischen der Stirnfläche des Ultraschallsensors und dem Teil, durch welches die Objekte detektiert werden sollen, elektrisch leitfähig sein muss. Dies wird durch eine Begrenzung der Elastizität des Klebemittels erreicht.

Aus der WO 2007036528 A1 ist bereits ein eletroakustischer Wandler bekannt, welcher von einem Senderichtungbeinflussungsring umgeben ist. Sowie der Ring als auch der Wandler sind mit dem gleichen Klebemittel an der Oberfläche des Fahrzeugteils angebracht. Damit wird entweder eine akustische Kopplung von Ring und Wandler oder eine akustische Entkopplung beide Bauteile in Abhängigkeit der Elastizität des Klebemittels verursacht.

Das Dokument DE 42 38 924 A1 offenbart eine Vorrichtung zur Detektion von Oberflächen, wobei diese ein Ultraschallsensor aufweist, der Signale senden und empfangen kann.

Es ist Aufgabe der vorliegenden Erfindung, eine Ultraschallsensorvorrichtung zu schaffen, welche das Senden von Ultraschallsignalen und das Empfangen der reflektierten Echos durch metallische Teile ermöglicht, welche hinter dem metallische Teil angeordnet wird.

Es ist eine weitere Aufgabe der vorliegenden Erfindung, eine Ultraschallsensorvorrichtung zu schaffen, mittels welcher zum einen die Schwingungsübertragung des Ultraschallsensors auf ein Fahrzeugsteil begrenzt wird und darüber hinaus die Störsignale reduziert werden und die Senderichtcharakteristik verbessert wird.

Diese Aufgabe wird durch eine Ultraschallsensorvorrichtung gemäß den unabhängigen Ansprüchen gelöst. Vorteilhafte Aus- und Weiterbildungen sind in den Unteransprüchen dargestellt.

Eine erfindungsgemäße Vorrichtung zur Detektion von Oberflächen und/oder zur Detektion des Abstandes erkannter Oberflächen umfasst zumindest einen Ultraschallsensor, der mittels eines elastischen Klebemittels an einem metallischen Teil, durch welches der Ultraschallsensor sendet und empfängt, angeordnet ist. Weiterhin umfasst die Vorrichtung ein im Wesentlichen ringförmiges Dämpfungsteil, welches den Ultraschallsensor umgibt und diesen in seiner Schwingungsübertragung begrenzt. Durch das ringförmige Dämpfungsteil wird die Übertragung der Ultraschallschwingungen auf das metallische Fahrzeugsteil, an dem die Ultraschallsensorvorrichtung angebracht ist, gezielt lokal begrenzt und es wird die Ausbreitung der Schwingung über das Teil so stark gedämpft, dass nicht mehr der gesamte Teil zur Schwingung angeregt wird und die Störsignale sehr stark reduziert werden. Zwischen dem Ultraschallsensor und dem Dämpfungsteil ist ein elastischer Entkopplungsring angeordnet. Auf der Oberfläche des metallischen Teils, an der der Ultraschallsensor angeordnet ist, ist ein schallabsorbierendes und/oder schalldämpfendes Material um den Ultraschallsensor und das Dämpfungsteil aufgebracht, wobei das schallabsorbierende und/oder schalldämpfende Material eine klebbare, ein- oder mehrlagige Bitumenschicht ist.

Das elastische Klebemittel zwischen dem Ultraschallsensor und dem metallischen Teil ist gemäß einer Weiterbildung der Erfindung Silikon.

Das ringförmige Dämpfungsteil kann unterschiedliche Ausführungen aufweisen. Gemäß der Erfindung, besteht das ringförmige Dämpfungsteil aus einem massiven Material.

Die Erhöhung der lokalen Masse des Bereichs um den applizierten Ulstraschallsensor unterdrückt die Ausbildung der Oberflächenwellen und bewirkt eine verbesserte Richtcharakteristik.

Vorzugsweise weisst das Material des ringförmigen Dämpfungsteils eine Dichte im Bereich der Dichte des metallischen Teiles auf, durch welches der Ultraschallsensor sendet und empfängt, um das Überkoppeln von mechanischen Schwingungen in das Teil zu verhindern.

Das Material des ringförmigen Dämpfungsteils weist vorzugsweise eine höhere Dichte als das metallische Teil auf und kann insbesondere aus Keramik oder Metal ausgebildet sein.

Gemäß einer Weiterbildung der Erfindung kann das im Wesentlichen ringförmige Dämpfungsteil unterschiedliche Außenkonturen sowie Innenkonturen aufweisen. Durch die Konturgestaltung kann nicht nur eine Schwingungsübertragungbegrenzung erfolgen, sondern auch die Abstrahlrichtcharakteristik des Ultraschallsensors beeinflusst werden. Beispielsweise kann das Dämpfungsteil eine eckige Innenkontur aufweisen, die vorzugsweise mit unterschiedlichen Abmaßen in den beiden senkrecht zueinanderstehenden Achsen.

Vorzugsweise ist vorgesehen, dass das Dämpfungsteil eine kreisförmige oder elliptische Außenkontur aufweist.

Das im Wesentlichen ringförmige Dämpfungsteil ist nach einer Ausführung der Erfindung direkt an einem metallischen Fahrzeugsteil befestigt, insbesondere mittels einem im wesentlichen unelastischen Klebemittel.

Durch die Erfindung wird erreicht, dass die Schwingungen der Membran des Ultraschallsensors nicht großflächig auf das metallische Teil übertragen werden und diese auch nicht mit einer zeitlichen Verzögerung in die Membran zurückgeleitet werden. Durch das Dämpfungsteil, das den Ultraschallsensor, insbesondere die Membran des Sensors umgibt, kann die Begrenzung der Schwingungsübertragung auf einen nur lokalen Bereich des Teils vor dem Ultraschallsensor erfolgen und darüber hinaus zugleich auch durch die unterschiedliche Innenkontur des Dämpfungsteils die Abstrahlcharakteristik definiert werden.

Durch die Masse des im wesentlichen ringförmigen Dämpfungsteils und die Steifigkeit des Klebemittels, das das Dämpfungsteil mit dem Fahrzeugteil verbindet, werden die Schwingungen in dem metallischen Fahrzeugteil erheblich reduziert und die Funktion des Ultraschallsensors in Bezug auf die Störsignale und Senderichtcharakteristik verbessert.

Vorzugsweise weist das Klebemittel zwischen dem Dämpfungsteil und dem metallischen Fahrzeugsteil eine Shore Härte D zwischen 50 und 60, und eine Festigkeit zwischen 10 und 16 Mpa auf.

Ferner sieht die Erfindung vor, dass auf der Oberfläche des metallischen Teils, an der der Ultraschallsensor angeordnet ist, um den Ultraschallsensor und das im wesentlichen ringförmige Dämpfungsteil ein schallabsorbierendes und/oder schalldämpfendes Material aufgebracht ist, welches zum Unterdrücken der induzierten Störsignale dient.

Vorzugsweise weist das schallabsorbierende und/oder schalldämpfende Material eine Dichte zwischen 1 und 12 kg/m2 auf.

Weiterhin ist vorzugsweise vorgesehen, dass das schallabsorbierende und/oder schalldämpfende Material eine Dicke zwischen 1 und 10 mm aufweist.

Erfindungsgemäß weist das schallabsorbierende und/oder schalldämpfende Material einen Verlustfaktor von 10 bis 50% auf, ermittelt nach einem Verfahren gemäß DIN ISO 6721.

Erfindungsgemäß ist zwischen dem im Wesentlichen ringförmigen Dämpfungsteil und dem Ultraschallsensor ein bereits angesprochener Entkopplungsring angeordnet. Dieser ist aus einem weichelastischen Material, beispielsweise Silikon, ausgebildet.

Vorzugsweise deckt der Entkopplungsring zwischen dem Ultraschallsensor und dem ringförmigen Dämpfungsteil zumindest die gemeinsame Fläche zwischen dem Dämpfungsteil und dem Ultraschallsensor ab.

Bei einer erfindungsgemäßen Anordnung ist das metallische Teil, durch welches der Ultraschallsensor sendet und empfängt ein Karosserieteil des Fahrzeuges, insbesondere die Außenhaut einer Fahrzeugtür, an deren Innenseite mindestens eine Ultraschallsensorvorrichtung verdeckt befestigt ist. Die verdeckte Verbauung bedeutet in diesem Zusammenhang, dass die Ultraschallsensorvorrichtung frontseitig vollständig durch das Karosserieteil verdeckt ist und der Ultraschallsensor durch das Metall hindurch sendet und empfängt.

Ein wesentlicher Vorteil einer solchen Anordnung ist, dass ein oder mehrere Ultraschallsensoren nicht nur an nicht metallischen Außenhautteilen eines Fahrzeuges verdeckt angeordnet werden können, sondern auch an allen denkbaren metallischen Außenhautteilen. Damit ist es möglich, diese für unterschiedlichste Anwendungsfälle an der für die Anwendung geeignetsten Stelle verdeckt anzuordnen, ohne Einfluss auf das Detektionsergebnis.

Weitere Merkmale der Erfindung ergeben sich aus den Figuren und der Figurenbeschreibung. Die vorstehend genannten Merkmale und Merkmalskombinationen als auch die nur in den Figuren allein gezeigten und/oder nur in der Figurenbeschreibung genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlasser. Der Umfang des Schutzes wird mit den Patentansprüchen definiert.

Nachfolgend wird die Erfindung anhand von Ausführungsbeispielen näher beschrieben. Die zugehörigen Zeichnungen zeigen:
- Fig. 1: eine Perspektive Darstellung eines Ausführungsbeispiel einer erfindungsgemäßen Anordnung;
- Fig. 2: eine explodierte perspektive Darstellung eines Ausführungsbeispiel einer erfindungsgemäßen Anordnung;
- Fig. 3: eine Schnittdarstellung durch ein Ausführungsbeispiel einer erfindungsgemäßen Anordnung;
- Fig. 4: eine Schnittdarstellung durch ein Ausführungsbeispiel einer erfindungsgemäßen Anordnung an einem metallischen Fahrzeugkarosserieteil, insbesondere einer Tür;
- Fig. 5: eine Schnittdarstellung durch ein Ausführungsbeispiel einer erfindungsgemäßen Anordnung an einem vorderen Stoßfänger eines Fahrzeuges.

In den Figuren werden gleiche oder funktionsgleiche Elemente mit den gleichen Bezugszeichen versehen.

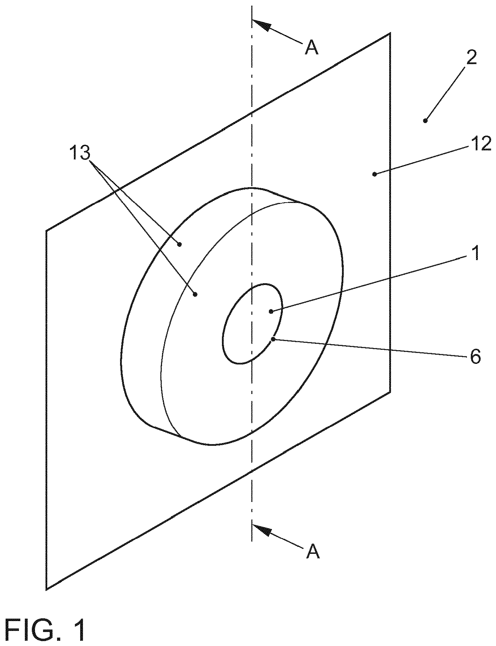

In Fig. 1 ist ein Ausführungsbeispiel einer erfindungsgemäßen Ultraschallvorrichtung mit einer Ansicht auf die Rückseite gezeigt.

Im montierten Zustand, wie in Fig. 1 gezeigt, ist eine schallabsorbierende und/oder schalldämpfende Bitumenmatte 12 auf der Oberfläche des metallischen Teils 2, an dem der Ultraschallsensor 1 angeordnet ist, um den Ultraschallsensor 1 und das wesentliche ringförmige Dämpfungsteil 7 vorgesehen. Zusätzlich ist eine weitere schallabsorbierende und/oder schalldämpfende Materialschicht, in bevorzugter Form einer Bitumenmatte 13, auf der nicht dem Ultraschallsensor 1 und/oder dem metallischen Teil 2, durch welches der Ultraschallsensor 1 sendet und empfängt, zugewandten Oberflächen des ringförmigen Dämpfungsteils 7 angeordnet, das heißt auf der Außenkontur 10 und der hinteren Seite 9 des ringförmigen Dämpfungsteils 7.

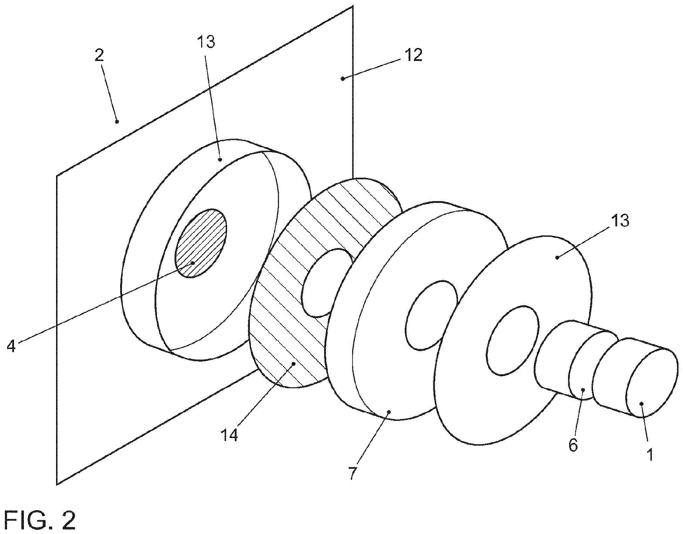

Fig. 2 zeigt eine explodierte Darstellung des in Fig. 1 gezeigten Ausführungsbeispiels.

In der erfindungsgemäßen Anordnung wird der Ultraschallsensor 1 mittels eines eslastischen Klebemittels 4 auf ein metallisches Fahrzeugteil 2, durch welches der Ultraschallsensor 1 sendet und empfängt, befestigt. Weiterhin umfasst die Anordnung des Ausführungsbeispiels ein im wesentlichen ringförmiges Dämpfungsteil 7, das den Ultraschallsensor umgibt und diesen in seiner Schwingungsübertragung begrenzt. Zwischen dem Ultraschallsensor und dem ringförmigen Dämpfungsteil befindet sich weiterhin ein Entkopplungsring 6.

Vorzugsweise weist das Material des Dämpfungsteils 7 eine Dichte im Bereich der Dichte des metallischen Teiles 2, durch welches der Ultraschallsensor 1 sendet und empfängt, auf. Das ringförmige Dämpfungsteil 7 kann beispielsweise aus Keramik oder Metal ausgebildet sein.

Das Dämpfungsteil 7 kann außerdem unterschiedliche Außenkonturen 10 sowie Innenkonturen 11 aufweisen. Vorzugsweise ist vorgesehen, dass das Dämpfungsteil 7 eine elliptische oder kreisförmige Außenkontur 10 aufweist.

Die Vorderseite 8 des ringförmigen Dämpfungsteils 7 ist insbesondere direkt an einer Seite 3 des metallischen Fahrzeugsteils 2 befestigt, insbesondere durch ein im wesentlichen unelastisches Klebemittel 14.

Auf der Oberfläche 3 des metallischen Teils 2, an der der Ultraschallsensor 1 angeordnet ist, ist um den Ultraschallsensor 1 und das Dämpfungsteil 7 und auf den nicht dem Ultraschallsensor 1 und/oder dem metallischen Teil 2, durch welches der Ultraschallsensor 1 sendet und empfängt, zugewandten Oberflächen (9 und 10) des Dämpfungsteils 7 ein schallabsorbierendes und/oder schalldämpfendes Material (12 und 13) aufgebracht.

Gemäß der Erfindung ist das schallabsorbierende und/oder schalldämpfende Material (12) eine klebbare ein- oder mehrlagige Bitumenschicht. Vorzugsweise kann das schallabsorbierende und/oder schalldämpfende Material (13) eine klebbare ein- oder mehrlagige Bitumenschicht oder ein einspritzbares Material wie Acrylat, Kautschuk oder Polyepoxid sein. Insbesondere weist das schallabsorbierende und/oder schalldämpfende Material (12 und 13) eine Dichte zwischen 1 und 12 kg/m2, eine Schichtdicke zwischen 1 und 10 mm und/oder einen Verlustfaktor von 10 bis 50% gemäß Verfahren nach DIN ISO 6721 gemessen.

In dem Ausführungsbeispiel deckt der Entkopplungsring 6 zwischen dem Ultraschallsensor 1 und der inneren Kontur 11 des ringförmigen Dämpfungsteils 7 zumindest die gemeinsame Fläche zwischen dem Dämpfungsteil 7 und dem Ultraschallsensor 1 ab.

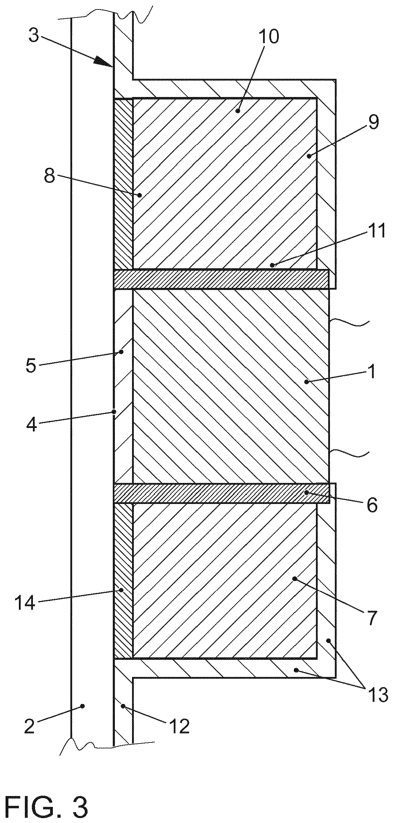

In Fig. 3 ist in einer schematischen Schnittdarstellung eine Anordnung gezeigt, welche einen Ultraschallsensor 1 aufweist, der verdeckt verbaut, hinter einem metallischen Fahrzeugteil 2 angeordnet ist. Die Ultraschallsensor 1 ist dabei an einer Seite 3 des metallischen Fahrzeugteils 2 befestigt. Dafür ist dabei eine Klebung über ein elastisches Klebemittel 4, wie Silikon, vorgesehen. Der Ultraschallsensor 1 ist somit frontseitig vollständig durch das Fahrzeugteil 2 verdeckt, sodass er durch das Fahrzeugteil 2 hindurch sendet und empfängt.

Der Ultraschallsensor 1 weist eine Membran 5 auf, die mittels des elastischen Klebemittels 4 auf dem Fahrzeugteil 2 angeordnet ist. Weiterhin ist der Ultraschallsensor 1 mit einem Entkopplungsring 6 umgeben, der aus einem weich-elastischen Material, beispielsweise Silikon, ausgebildet ist. Darüber hinaus umfasst der Ultraschallsensor 1 ein ringförmiges Dämpfungsteil 7, das einstückig ausgebildet ist. Das Dämpfungsteil 7 umgreift sowohl den Ultraschallsensor 1 als auch den Entkopplungsring 6. Das Dämpfungsteil 7 weist eine vordere Seite 8 als auch eine hintere Seite 9 und eine Außenkontur 10 auf. Wesentlich ist, dass die Außenkontur 10 des Dämpfungsteiles 7 eine unterschiedliche Formgebung zu der Innenkontur 11 des Dämpfungsteils 7 aufweisen kann. Die Innenkontur 11, die dem Entkopplungsring 6 zugewandt ist, kann im Hinblick auf Ihre Form gleich der Außenkontur des Entkopplungsrings 6 sein, insbesondere ist die Innenkontur 11 an die Außengeometrie des Entkopplungsrings 6 angepasst. Besonders vorteilhaft ist dabei eine Klebeverbindung zwischen dem ringförmigen Dämpfungsteil 7 und dem metallischen Fahrzeugteil 2 über ein nicht elastisches Klebemittel 14, vorgesehen. Das Dämpfungsteil 7 ist somit mit der Vorderseite 8 vollständig auf dem Fahrzeugteil 2 angeordnet.

Das nicht elastische Material zwischen dem Dämpfungsteil 7 und dem Fahrzeugteil 2 kann beispielsweise eine Shore Härte D zwischen 50 und 60, und eine Festigkeit zwischen 10 und 16 Mpa aufweissen.

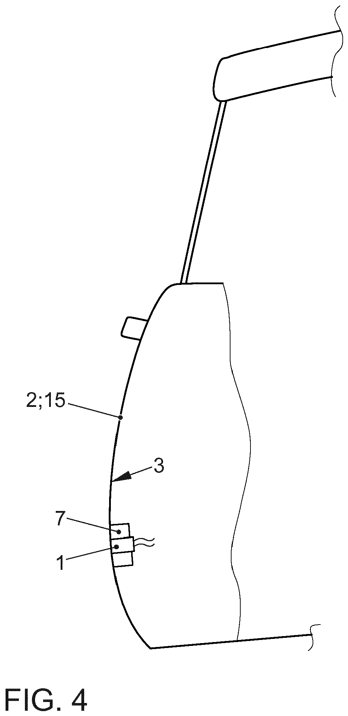

In der Fig. 4 ist eine erfindungsgemäße Ultraschallsensorvorrichtung an einem metallischen Karosserieteil 2, insbesondere einer Außenhaut einer Fahrzeugtür 15 gezeigt, an deren Innenseite 3 die Ultraschallsensorvorrichtung verdeckt verbaut befestigt ist.

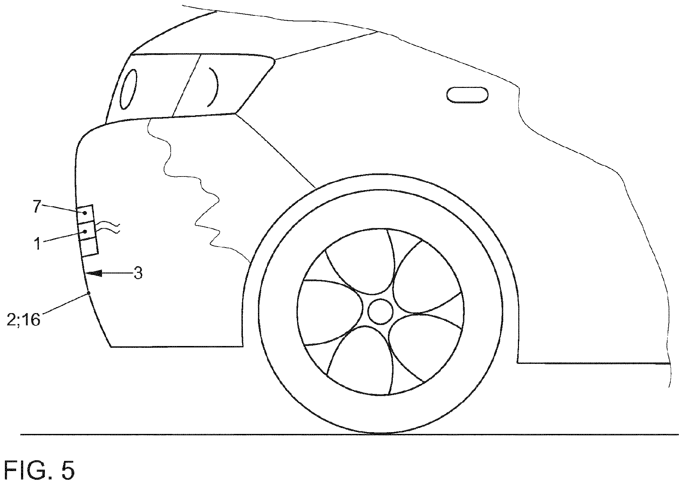

Eine weitere erfindungsgemäße Ausführung ist in Fig. 5 gezeigt. Hier ist das Teil 2, durch welches der Ultraschallsensor 1 sendet und empfängt, ein Kunststoffs Stoßfänger 16 eines Kraftfahrzeuges.

## Patentansprüche

1. Vorrichtung zur Detektion von Oberflächen und/oder zur Detektion des Abstandes erkannter Oberflächen mit mindestens einem Ultraschallsensor (1), der an einer Oberfläche (3) eines metallischen Teiles (2) mittels eines Klebemittels (4) befestigt ist und Signale durch das metallische Teil (2) sendet und empfängt, mindestens einem im wesentlichen ringförmigen Dämpfungsteil (7), welches den Ultraschallsensor (1) umgibt, wobei das ringförmige Dämpfungsteil (7) aus einem massiven Material besteht, und mindestens einem elastischen Entkopplungsring (6) zwischen dem Ultraschallsensor (1) und dem ringförmigen Dämpfungsteil (7)
**dadurch gekennzeichnet,**
**dass** das Klebemittel (4) ein elastisches Klebemittel ist, wobei auf der Oberfläche (3) des metallischen Teils (2), an der der Ultraschallsensor (1) angeordnet ist, um den Ultraschallsensor (1) und das Dämpfungsteil (7) ein schallabsorbierendes und/oder schalldämpfendes Material (12) aufgebracht ist, wobei das schallabsorbierende und/oder schalldämpfende Material eine klebbare, ein- oder mehrlagige Bitumenschicht ist.

2. Vorrichtung nach Anspruch 1
**dadurch gekennzeichnet,**
**dass** das Material des ringförmigen Dämpfungsteils (7) eine Dichte im Bereich der Dichte des metallischen Teils (2) aufweist.

3. Vorrichtung nach Anspruch 1 oder 2
**dadurch gekennzeichnet,**
**dass** das ringförmige Dämpfungsteil (7) eine elliptische äußere Kontur (10) und eine elliptische oder rechteckige innere Kontur (11) aufweist.

4. Vorrichtung nach einem der Ansprüche 1 bis 3,
**dadurch gekennzeichnet,**
**dass** das ringförmige Dämpfungsteil (7) mittels eines im Wesentlichen nicht elastischen Klebemittels (14) an dem metallischen Teil (2) befestigt ist.

5. Vorrichtung nach einem der Ansprüche 1 bis 4,
**dadurch gekennzeichnet,**
**dass** auf den nicht dem Ultraschallsensor (1) und/oder dem metallischen Teil (2) zugewandten Oberflächen (9, 10) des ringförmigen Dämpfungsteils (7) ein schallabsorbierendes und/oder schalldämpfendes Material (13) aufgebracht ist.

6. Vorrichtung nach Anspruch 1 oder 5,
**dadurch gekennzeichnet,**
**dass** das schallabsorbierende und/oder schalldämpfende Material (12, 13) eine Dichte zwischen 1 und 12 kg/m2 aufweist.

7. Vorrichtung nach Anspruch 1 oder 5,
**dadurch gekennzeichnet,**
**dass** das schallabsorbierende und/oder schalldämpfende Material (12, 13) eine Dicke im Bereich von 1 bis 10 mm aufweist.

8. Vorrichtung nach einem der Ansprüche 1 bis 7,
**dadurch gekennzeichnet,**
**dass** die Abdeckung des Entkopplungsrings (6) zumindest über die gemeinsame Fläche (11) zwischen dem ringförmigen Dämpfungsteil (7) und dem Ultraschallsensor (1) verläuft.

9. Vorrichtung nach einem der Ansprüche 1 bis 8,
**dadurch gekennzeichnet,**
**dass** das metallische Teil (2), durch welches der Ultraschallsensor sendet und empfängt, ein Karosserieteil (15) eines Kraftfahrzeuges ist.

10. Vorrichtung nach einem der Ansprüche 1 bis 9,
**dadurch gekennzeichnet,**
**dass** das metallische Teil (2), durch welches der Ultraschallsensor sendet und empfängt, ein Stoßfänger (16) eines Kraftfahrzeuges ist.

## Claims

1. Device for detecting surfaces and/or for detecting the distance between detected surfaces with at least one ultrasonic sensor (1) which is attached to a surface (3) of a metallic part (2) by means of a bonding agent (4) and transmits and receives signals through the metallic part (2), at least one essentially annular damping part (7) which surrounds the ultrasonic sensor (1), wherein the annular damping part (7) is composed of a solid material and of at least one elastic isolating ring (6) between the ultrasonic sensor (1) and the annular damping part (7),
**characterized**
**in that** the bonding agent (4) is an elastic bonding agent,
wherein a sound-absorbing and/or sound-damping material (12) is applied around the ultrasonic sensor (1) and the damping part (7), on the surface (3) of the metallic part (2) on which the ultrasonic sensor (1) is arranged, wherein the sound-absorbing and/or sound-damping material is a single-layer or multi-layer bitumen layer which can be bonded.

2. Device according to Claim 1,
**characterized**
**in that** the material of the annular damping part (7) has a density in the region of the density of the metallic part (2).

3. Device according to Claim 1 or 2,
**characterized**
**in that** the annular damping part (7) has an elliptical outer contour (10) and an elliptical or rectangular inner contour (11).

4. Device according to one of Claims 1 to 3,
**characterized**
**in that** the annular damping part (7) is attached to the metallic part (2) by means of an essentially non-elastic bonding agent (14).

5. Device according to one of Claims 1 to 4,
**characterized**
**in that** a sound-absorbing and/or sound-damping material (13) is applied to the surfaces (9, 10), which do not face the ultrasonic sensor (1) and/or the metallic part (2), of the annular damping part (7) .

6. Device according to Claim 1 or 5,
**characterized**
**in that** the sound-absorbing and/or sound-damping material (12, 13) has a density between 1 and 12 kg/m².

7. Device according to Claim 1 or 5,
**characterized**
**in that** the sound-absorbing and/or sound-damping material (12, 13) has a thickness in the range from 1 to 10 mm.

8. Device according to one of Claims 1 to 7,
**characterized**
**in that** the cover of the isolating ring (6) runs at least over the entire area (11) between the annular damping part (7) and the ultrasonic sensor (1).

9. Device according to one of Claims 1 to 8,
**characterized**
**in that** the metallic part (2) through which the ultrasonic sensor transmits and receives is a bodywork part (15) of a motor vehicle.

10. Device according to one of Claims 1 to 9,
**characterized**
**in that** the metallic part (2) through which the ultrasonic sensor transmits and receives is a bumper (16) of a motor vehicle.

## Revendications

1. Dispositif de détection de surface et/ou de détection de l'écart par rapport à des surfaces reconnues, comprenant au moins un capteur d'ultrasons (1), qui est fixé à une surface (3) d'une pièce métallique (2) au moyen d'un agent adhésif (4) et émet et reçoit des signaux à travers la pièce métallique (2), au moins une pièce d'amortissement (7) sensiblement de forme annulaire qui entoure le capteur d'ultrasons (1), la pièce d'amortissement (7) de forme annulaire se composant d'un matériau massif, et au moins une bague de découplage (6) élastique entre le capteur d'ultrasons (1) et la pièce d'amortissement (7),
**caractérisé en ce**
**que** l'agent adhésif (4) est un agent adhésif élastique, un matériau (12) absorbant le bruit et/ou amortissant le bruit étant appliqué autour du capteur d'ultrasons (1) et de la pièce d'amortissement (7) sur la surface (3) de la pièce métallique (2) sur laquelle est disposé le capteur d'ultrasons (1), le matériau absorbant le bruit et/ou amortissant le bruit étant une couche de bitume monocouche ou multicouche collante.

2. Dispositif selon la revendication 1, **caractérisé en ce que** la pièce d'amortissement (7) de forme annulaire présente une densité dans la plage de la densité de la pièce métallique (2).

3. Dispositif selon la revendication 1 ou 2, **caractérisé en ce que** la pièce d'amortissement (7) de forme annulaire possède un contour extérieur (10) elliptique et un contour intérieur (11) elliptique ou rectangulaire.

4. Dispositif selon l'une des revendications 1 à 3, **caractérisé en ce que** la pièce d'amortissement (7) de forme annulaire est fixée à la pièce métallique (2) au moyen d'un agent adhésif (14) sensiblement non élastique.

5. Dispositif selon l'une des revendications 1 à 4, **caractérisé en ce qu'**un matériau (13) absorbant le bruit et/ou amortissant le bruit est appliqué sur les surfaces (9, 10) de la pièce d'amortissement (7) qui ne font pas face au capteur d'ultrasons (1) et/ou à la pièce métallique (2).

6. Dispositif selon la revendication 1 ou 5, **caractérisé en ce qu'**un matériau (12, 13) absorbant le bruit et/ou amortissant le bruit présente une densité entre 1 et 12 kg/m².

7. Dispositif selon la revendication 1 ou 5, **caractérisé en ce qu'**un matériau (12, 13) absorbant le bruit et/ou amortissant le bruit présente une épaisseur dans la plage de 1 à 10 mm.

8. Dispositif selon l'une des revendications 1 à 7, **caractérisé en ce que** le recouvrement de la bague de découplage (6) s'étend au moins sur la surface commune (11) entre la pièce d'amortissement (7) et le capteur d'ultrasons (1) .

9. Dispositif selon l'une des revendications 1 à 8, **caractérisé en ce que** la pièce métallique (2) à travers laquelle émet et reçoit le capteur d'ultrasons est une pièce de carrosserie (15) d'un véhicule automobile.

10. Dispositif selon l'une des revendications 1 à 9, **caractérisé en ce que** la pièce métallique (2) à travers laquelle émet et reçoit le capteur d'ultrasons est un pare-chocs (16) d'un véhicule automobile.
